# EUROPÄISCHE PATENTSCHRIFT

(11) **EP 2 807 726 B1**
(45) Veröffentlichungstag und Bekanntmachung des Hinweises auf die Patenterteilung: **04.09.2019**
(21) Anmeldenummer: 13701602.8
(22) Anmeldetag: 22.01.2013
(51) Int. Cl.: H02K 3/487

(54) **ROTOR FÜR EINE ROTIERENDE ELEKTRISCHE MASCHINE UND ELEKTROMOTOR**
ROTOR FOR A ROTATING ELECTRICAL MACHINE AND ELECTRIC MOTOR
ROTOR POUR MACHINE ÉLECTRIQUE TOURNANTE ET MOTEUR ÉLECTRIQUE

(30) Priorität: 26.01.2012 DE 202012000842 U
(43) Veröffentlichungstag der Anmeldung: 03.12.2014
(73) Patentinhaber: Continental Automotive GmbH, 30165 Hannover (DE)
(72) Erfinder: BULATOW, Michael, 10553 Berlin (DE); WELKE, Knut, 73235 Weilheim an der Teck (DE)
(86) Internationale Anmeldenummer: PCT/EP2013/051085
(87) Internationale Veröffentlichungsnummer: WO 2013/110580

(56) Entgegenhaltungen:
- EP-A1- 1 494 335
- EP-A2- 2 296 256
- DE-A1- 1 925 625
- US-A- 3 991 152
- US-A- 5 036 238

## Beschreibung

Die vorliegende Erfindung betrifft einen Rotor für eine rotierende elektrische Maschine, insbesondere für einen Elektromotor oder einen Generator, sowie einen Elektromotor mit einem solchen Rotor.

In modernen Kraftfahrzeugen werden zunehmend Elektromotoren auch als Antriebsmotoren verbaut. Dabei kommen zum Teil fremderregte Synchronmaschinen zum Einsatz, die einen Rotor aus einem mit einer Erregerwicklung versehenen Blechpaket aufweisen. Bei derartigen Rotoren sind die einzelnen Polzähne durch Nuten voneinander getrennt. In den Nuten ist die Erregerwicklung untergebracht.

Im Betrieb treten sowohl bei Innen- als auch bei Außenläufern sehr hohe Fliehkräfte auf, die die Erregerwicklung aus den Nuten ziehen können. Die Fliehkräfte sind von der Drehzahl und von dem Gewicht der Nutinnenkomponenten abhängig. Insbesondere bei hochdrehenden Maschinen wird die Wicklung daher nach der Montage gesichert. Dazu sind verschiedene Bindemittel bekannt, die als Tränkharze oder Vergussmassen eingesetzt werden. Das Vergießen von Hohlräumen im Rotor zur Versteifung ist auch für permanenterregte Rotoren beispielsweise aus der DE 10 2009 046 716 A1 bekannt.

Zusätzlich werden manchmal Nutstopper oder Nutkeile eingesetzt, um ein Herausziehen der Wicklung aus der Nut zu verhindern. Bei für Elektromotoren mit sehr hoher Drehzahl (10 000 Umdrehungen pro Minute und mehr) ausgelegten Rotoren wäre es wünschenswert, die Nutinnenkomponenten, insbesondere die Erregerwicklung, noch wirksamer gegen im Betrieb auftretende Fliehkräfte zu sichern.

Weitere Druckschriften DE 19 25 625 A1, EP 1 494 335 A1, US 5 036 238 A, EP 2 296 256 A2 oder US 3 991 152 A beschreiben einen Rotor mit Separatoren, die zum Festhalten von Erregerwicklungen des Rotors vorgesehen sind.

Aufgabe der Erfindung ist es daher, einen kostengünstigen Rotor für eine rotierende elektrische Maschine anzugeben, dessen Erregerwicklung derart gegen Fliehkräfte fixiert ist, dass der Rotor auch für sehr hohe Drehzahlen einsetzbar ist.

Die Aufgabe wird gelöst durch den Gegenstand des unabhängigen Patentanspruchs 1 sowie des nebengeordneten Patentanspruchs 8. Bevorzugte Weiterbildungen der Erfindung sind in den abhängigen Ansprüchen angegeben.

Gemäß einem Aspekt der Erfindung wird ein Rotor für eine rotierende elektrische Maschine angegeben, der eine Anzahl von eine Erregerwicklung tragenden Polzähnen aufweist. Zwischen den Polzähnen sind jeweils Nuten gebildet und in den Nuten sind Nutkeile vorgesehen. In den Nuten sind ferner Separatoren angeordnet, die sich von den Nutkeilen ausgehend zwischen den Wicklungen in Richtung eines Nutbodens erstrecken. Für den Separator wird ein Kunststoff gewählt. Der Kunststoff ist der Kunststoff elektrisch isolierend und unmagnetisierbar. In einer Ausführungsform ist der Separator als ein aus Kunststoff gespritztes Bauteil ausgebildet. Erfindungsgemäß ist der Separator im Querschnitt V-förmig ausgebildet. Dabei zeigt die Spitze des V zum Nutboden hin, die beiden Schenkel des V können an ihren Enden mit dem Nutkeil verbunden sein oder sich an diesem abstützen. Der Separator steht unter Vorspannung und presst sich in zumindest einem Andruckbereich an die Wicklungen an. Durch die Vorspannung werden die Wicklungen der Polzähne an das Rotorblechpaket angedrückt. Dadurch können elektromagnetische Verluste reduziert werden.

Die Separatoren haben unter anderem die Aufgabe, einen elektrischen Mindestabstand zwischen benachbarten bewickelten Polzähnen zu halten. Sie sichern jedoch auch die Nutinnenkomponenten zusätzlich, da sie auftretende Fliehkräfte effizient ableiten. Zur Stabilisierung der Nutinnenkomponenten tragen die Nutkeile bei. Ferner kann der Nutinnenraum mit einer Vergussmasse vergossen sein. Darüber hinaus sind jedoch auch Separatoren vorgesehen und derart ausgebildet, dass sie zur Stabilisierung der Nutinnenkomponenten ebenfalls beitragen, indem sie die im Betrieb entstehenden Fliehkräfte in günstiger Weise ableiten. Ein derartiger Rotor ist auch für sehr hohe Drehzahlen von 10 000 Umdrehungen pro Minute und mehr geeignet.

Die im Betrieb auftretenden Fliehkräfte sind in der Regel asymmetrisch, da die benachbarten Polzähne nicht absolut identisch bewickelt werden können. Zudem treten bei getränkten oder vergossenen Rotoren wegen des höheren Gewichts besonders hohe Fliehkräfte auf. Der sich ausgehend vom Nutkeil zwischen den Wicklungen in Richtung des Nutbodens erstreckende Separator teilt den Nutinnenbereich in mindestens zwei, bei entsprechender Ausformung des Separators auch in drei oder mehr Bereiche auf und leitet die in den einzelnen Bereichen auftretenden Kräfte gezielt ab.

Bei einem derartig geformten Separator wird der Nutinnenbereich in drei Teilbereiche aufgeteilt: Die beiden Bereiche außerhalb der Schenkel des Separators und den von den Schenkeln eingeschlossenen Bereich. Die in den beiden äußeren Bereichen auftretenden Fliehkräfte sind typischerweise in etwa gleich groß. Sie können über die beiden Schenkel des Separators in Randbereiche des Nutkeils abgeleitet werden. In diesen Randbereichen stützt sich der Nutkeil an den Polzähnen ab und ist somit verhältnismäßig stark belastbar. Dort einwirkende Kräfte führen daher nicht zur Verbiegung oder Lockerung der Nutkeile.

Im dritten, von den Schenkeln eingeschlossenen Bereich treten nennenswerte Fliehkräfte nur auf, wenn dieser mit Vergussmasse gefüllt ist. Diese Fliehkräfte wirken dann unmittelbar auf den Nutkeil. Da hier aber nur die durch den Keil aus Vergussmasse im Inneren des Separators bedingten, verhältnismäßig geringen Fliehkräfte wirken, wird der Nutkeil gegenüber einer Anordnung ohne Separator deutlich entlastet.

Die Form des Separators verringert somit die auf den besonders kritischen zentralen Bereich des Nutkeils wirkenden Fliehkräfte, indem sie einen erheblichen Teil dieser Kräfte in die Randbereiche des Nutkeils ableitet.

In einer Ausführungsform ist der Separator im Bereich des Nutkeils zwischen dem Nutkeil und den Wicklungen angeordnet und isoliert diese voneinander.

In einer Ausführungsform ist die Erregerwicklung von einer Vergussmasse umgeben. Dazu wird nach der Montage des Rotors, nach Aufbringen der Wicklungen und Montieren der Nutkeile und Separatoren die elektrisch isolierende Vergussmasse, beispielsweise ein Vergussharz bzw. Epoxidharz wie Araldit oder ein Kunststoff, in die Hohlräume innerhalb der Nuten des Rotors eingebracht und härtet aus. In einer Ausführungsform sind die Hohlräume innerhalb der Nuten im Wesentlichen vollständig mit einer Vergussmasse vergossen.

Bei derartigen Rotoren sind die Nutinnenkomponenten, insbesondere die Erregerwicklung, besonders gut gegen im Betrieb auftretende Fliehkräfte gesichert.

In einer Ausführungsform füllt die Vergussmasse auch einen zwischen dem Nutkeil und Schenkeln des Separators gebildeten Innenbereich aus. Bei einem derartigen Rotor sind die auf den Nutkeil wirkenden Fliehkräfte aufgrund der etwas größeren rotierenden Masse geringfügig höher. Es muss jedoch beim Vergießen der Innenbereich des Separators nicht abgedichtet werden. Alternativ kann der zwischen dem Nutkeil und den Schenkeln des Separators gebildete Innenbereich von Vergussmasse freigehalten sein.

Alternativ kann die Erregerwicklung auch von einer Tränkmasse, beispielsweise einem Tränkharz, umgeben sein. Beim Tränken wird der Rotor in die Tränkmasse getaucht und anschließend getrocknet. Dabei werden alle Nutkomponenten zusammengeklebt, der Rest der Tränkmasse tropft ab. Die Rotornuten werden dabei typischerweise nicht vollständig aufgefüllt.

Vorzugsweise weisen die Polzähne Ausnehmungen auf. Die Nutkeile weisen Randbereiche auf und sind an den jeweiligen Randbereichen in den Ausnehmungen der jeweiligen Polzähne verklemmt. Die Separatoren stützen sich in den Randbereichen der jeweiligen Nutkeile an den jeweiligen Polzähnen ab.

Gemäß einem Aspekt der Erfindung wird ein Elektromotor mit dem beschriebenen Rotor angegeben. Der Elektromotor kann insbesondere als fremderregte Synchronmaschine ausgebildet sein. Er kann sowohl als Innen- als auch als Außenläufer ausgebildet sein.

Da die Nutinnenkomponenten wirksam gegen eine Zerstörung durch auftretende Fliehkräfte gesichert sind, kann der Elektromotor für Drehzahlen von mehr als 10 000 Umdrehungen pro Minute ausgelegt sein.

Derartige Elektromotoren eignen sich für die Verwendung in einem Kraftfahrzeug. Sie können sowohl als im Antriebsstrang vollintegrierte Antriebsmotoren als auch beispielsweise als Startergeneratoren oder Achsmotoren eingesetzt werden. Gemäß einem Aspekt der Erfindung wird deshalb ein Kraftfahrzeug mit einem Antrieb angegeben, der den beschriebenen Elektromotor aufweist. Das Kraftfahrzeug kann dabei als Elektro- oder Hybridfahrzeug ausgebildet sein.

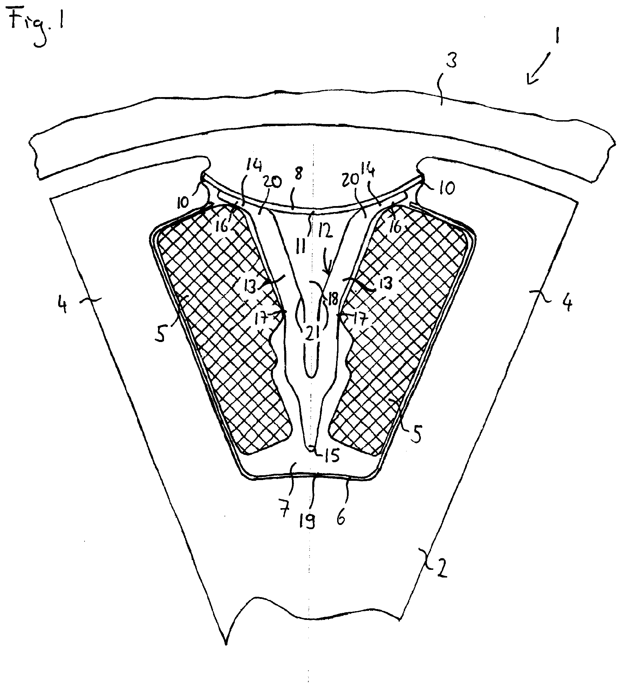

Ausführungsformen der Erfindung werden nun anhand der beiliegenden Figur näher beschrieben.

Die einzige Figur zeigt schematisch einen Querschnitt durch einen Elektromotor 1 gemäß einer Ausführungsform der Erfindung mit einem als Blechpaket ausgebildeten Rotor 2 und einem den Rotor 2 umgebenden Stator 3.

Der Rotor 2 weist eine Anzahl von Polzähnen 4 auf, die durch Nuten 7 voneinander getrennt sind. Die Polzähne 4 tragen Erregerwicklungen 5, die gegen das Rotorblechpaket durch ein Nutisolationspapier 6 elektrisch isoliert sind. Die Isolierung kann auch anders, beispielsweise durch Umspritzen mit einem Kunststoff, erfolgen.

Die Nut 7 wird nach außen hin abgeschlossen durch einen Nutkeil 8. Der Nutkeil 8 ist aus einem nicht magnetisierbaren Material, beispielsweise einem Stahl, ausgebildet.

Die Nutkeile 8 sind in dieser Ausführungsform aus einem Material ausgebildet, das im Wesentlichen die Legierungszusammensetzung Fe_{Rest}CrₐNi_{b}Mn_{c}C_{d}SiₑP_{f}S_{g}Nₕ aufweist, worin a, b, c, d, e, f, g und h in Atomprozent angegeben sind und 18 ≤ a ≤ 19; 12 ≤ b ≤ 13; 0 ≤ c ≤ 1, 4; 0 ≤ d ≤ 0,055; 0 ≤ e ≤ 0,6; 0 ≤ f ≤ 0,04; 0 ≤ g ≤ 0,008 und 0 ≤ h ≤ 0,1 gilt. Daneben kann das Material fertigungstypische Verunreinigungen mit anderen Stoffen aufweisen.

Gegenüber bekannten "Nirosta"-Stählen weist das für die Nutkeile 8 eingesetzte Material einen besonders hohen Anteil an Chrom und Nickel auf. Wie sich herausgestellt hat, bleiben Werkstücke aus diesem Stahl auch nach dem Umformen, Stanzen oder Schneiden unmagnetisierbar.

In der gezeigten Ausführungsform weist der Nutkeil 8 eine konkave Form auf mit einer Aufwölbung 11 zum Innern des Rotors 2 hin. Mit seinen Randbereichen ist der Nutkeil 8 in Ausnehmungen 10 in den Polzähnen 4 aufgenommen und gehaltert.

Der Nutkeil 8 sichert die Nutinnenkomponenten, insbesondere die Erregerwicklungen 5, auch bei hohen Drehzahlen des Elektromotors 1 in der Nut 7.

Zur besseren Verteilung und Ableitung der im Betrieb auftretenden Fliehkräfte ist ein Separator 12 vorgesehen, der beispielsweise als Kunststoffspritzteil ausgebildet ist. Der Separator 12 ist im Querschnitt V-förmig und weist zwei Schenkel 13 auf, die sich von einem zwischen dem Nutkeil 8 und den Wicklungen 5 anliegenden Außenbereich 14 bis zu einem in der Nähe des Nutbodens 19 liegenden Endbereich 15 erstrecken, wo sie sich vereinigen. Innerhalb der Schenkel 13 ist der Innenbereich 18 gebildet.

Die Separatoren 12 werden nach der Bewicklung des Blechpakets in die Nuten 7 eingesetzt. Um eine Beschädigung der Erregerwicklungen 5 bzw. ihrer Isolation zu vermeiden, werden die Separatoren 12 so hergestellt, dass sie keine scharfen Grate oder Spitzen aufweisen.

Der Nutkeil 8 und der Separator 12 erstrecken sich in den Nuten 7 im Wesentlichen über deren gesamte Länge des Rotors 2. Üblich ist es, die Nuten zu schrägen, um beispielsweise das Rastmoment des Elektromotors zu verringern. Die Separatoren 12 sind sowohl für Rotoren mit schräger Nut als auch für Rotoren mit gerader Nut geeignet.

Im Außenbereich 14 ist der Separator 12 verhältnismäßig dünn ausgebildet, um den Nutfüllfaktor (Kupferfläche pro Nutfläche) nicht unnötig zu verringern. In diesem Bereich isoliert er den Nutkeil 8 von den Wicklungen 5.

Der Separator 12 ist mit einer Vorspannung montiert und weist einen ersten Andruckbereich 16 in seinem Außenbereich 14 und etwas weiter innen einen zweiten Andruckbereich 17 auf, in denen er die Wicklungen 5 gegen die Polzähne 4 drückt.

Ferner sind die Schenkel 13 nicht gerade, sondern der Separator 12 weist erste und zweite gekrümmte Bereiche 20, 21 auf. Durch diese Aufrundungen werden an den Separatoren 12 Spannungsspitzen vermieden. Die Krümmung in den ersten gekrümmten Bereichen 20 hat darüber hinaus noch die Funktion, die Berührungsfläche zwischen Separator 12 und Nutkeil 8 im zentralen, weniger stark belastbaren Bereich des Nutkeils 8 zu verringern. Dadurch verschiebt sich der Bereich, in dem der Separator 12 Kräfte in den Nutkeil 8 einleitet, weiter nach außen.

In nicht gezeigten Ausführungsformen kann auch eine größere oder kleinere Anzahl von Andruckbereichen vorgesehen sein.

Zur Sicherung der Erregerwicklung 5 ist die Nut 7 im Wesentlichen vollständig mit einer der Übersichtlichkeit halber nicht dargestellten Vergussmasse gefüllt.

Der Separator 12 kann zusammen mit dem Nutkeil 8 axial oder radial in die mit der Wicklung 5 versehene Nut 7 unter Vorspannung montiert werden.

Im Betrieb des Elektromotors 1 treten Fliehkräfte auf. Der Separator 12 verlagert diese über seinen Außenbereich 14 an den Randbereich des Nutkeils 8. An seinem Randbereich ist der Nutkeil 8 in den Ausnehmungen 10 verklemmt und besonders belastbar. Hier können demnach höhere Kräfte eingeleitet werden, ohne dass der Nutkeil 8 überlastet und beschädigt oder aus der Nut 7 gedrückt wird.

Obwohl zumindest eine beispielhafte Ausführungsform in der vorhergehenden Beschreibung gezeigt wurde, können verschiedene Änderungen und Modifikationen im Rahmen des durch die Ansprüche definierten Schutzbereiches vorgenommen werden.

### Bezugszeichenliste

- 1: Elektromotor
- 2: Rotor
- 3: Stator
- 4: Polzahn
- 5: Erregerwicklung
- 6: Nutisolationspapier
- 7: Nut
- 8: Nutkeil
- 10: Ausnehmung
- 11: zentrale Aufwölbung
- 12: Separator
- 13: Schenkel
- 14: Außenbereich
- 15: Endbereich
- 16: Andruckbereich
- 17: Andruckbereich
- 18: Innenbereich
- 19: Nutboden
- 20: gekrümmter Bereich
- 21: gekrümmter Bereich

## Patentansprüche

1. Rotor (2) für eine rotierende elektrische Maschine, der folgendes aufweist:
- eine Anzahl von eine Erregerwicklung (5) tragenden Polzähnen (4);
- zwischen den Polzähnen (4) sind jeweils Nuten (7) gebildet;
- in den Nuten (7) sind Nutkeile (8) vorgesehen;
- in den Nuten (7) sind ferner Separatoren (12) angeordnet, die sich von den Nutkeilen (8) ausgehend zwischen den Wicklungen (5) in Richtung eines Nutbodens (19) erstrecken, wobei
die Separatoren (12) im Querschnitt V-förmig ausgebildet sind, die Spitze des V zum Nutenboden hin zeigt, und die Separatoren (12) unter Vorspannung stehen und sich in zumindest einem Andruckbereich (16, 17) an die Erregerwicklungen (5) anpressen,
**dadurch gekennzeichnet, dass**
- die Separatoren (12) aus einem Kunststoff ausgebildet sind und
- die beiden Schenkel (13) der V-förmigen Separatoren (12) an ihren Enden mit den Nutkeilen (8) verbunden sind oder sich an diesen abstützen.

2. Rotor (2) nach Anspruch 1,
wobei der Separator (12) im Bereich des Nutkeils (8) zwischen dem Nutkeil (8) und den Erregerwicklungen (5) angeordnet ist und diese elektrisch voneinander isoliert.

3. Rotor (2) nach einem der Ansprüche 1 oder 2,
wobei die Erregerwicklung (5) von einer Vergussmasse umgeben ist.

4. Rotor (2) nach Anspruch 3,
wobei die Vergussmasse auch einen zwischen dem Nutkeil (8) und Schenkeln (13) des Separators (12) gebildeten Innenbereich (18) ausfüllt.

5. Rotor (2) nach Anspruch 3,
wobei ein zwischen dem Nutkeil (8) und Schenkeln (13) des Separators (12) gebildeter Innenbereich (18) von Vergussmasse freigehalten ist.

6. Rotor (2) nach einem der Ansprüche 1 oder 2,
wobei die Erregerwicklung (5) von einer Tränkmasse umgeben ist.

7. Rotor (2) nach einem der vorangehenden Ansprüche, wobei
- die Polzähne (4) Ausnehmungen (10) aufweisen;
- die Nutkeile (8) Randbereiche aufweisen und an den jeweiligen Randbereichen in den Ausnehmungen (10) der jeweiligen Polzähne (4) verklemmt sind; und
- die Separatoren (12) sich in den Randbereichen der jeweiligen Nutkeile (8) an den jeweiligen Polzähnen (4) abstützen.

8. Elektromotor (1) mit einem Rotor (2) nach einem der Ansprüche 1 bis 7.

## Claims

1. Rotor (2) for a rotating electric machine, said rotor having the following:
- a number of pole teeth (4) bearing a field winding (5);
- in each case slots (7) are formed between the pole teeth (4);
- slot wedges (8) are provided in the slots (7);
- in addition separators (12) are arranged in the slots (7), which separators extend starting from the slot wedges (8) between the windings (5) in the direction of a slot base (19), wherein
the separators (12) are V-shaped in cross section, the point of the V points towards the slot base, and the separators (12) are under prestress and press against the field windings (5) in at least one contact-pressure region (16, 17),
**characterized in that**
- the separators (12) are formed from a plastic and
- the two limbs (13) of the V-shaped separators (12) are connected at their ends to the slot wedges (8) or are supported on said slot wedges.

2. Rotor (2) according to Claim 1,
wherein the separator (12) is arranged in the region of the slot wedge (8) between the slot wedge (8) and the field windings (5) and electrically insulates said slot wedge and said field windings from one another.

3. Rotor (2) according to either of Claims 1 and 2,
wherein the field winding (5) is surrounded by a potting compound.

4. Rotor (2) according to Claim 3,
wherein the potting compound also fills an inner region (18) formed between the slot wedge (8) and limbs (13) of the separator (12).

5. Rotor (2) according to Claim 3,
wherein an inner region (18) formed between the slot wedge (8) and the limbs (13) of the separator (12) is kept free of potting compound.

6. Rotor (2) according to one of Claims 1 and 2,
wherein the field winding (5) is surrounded by an impregnating compound.

7. Rotor (2) according to one of the preceding claims,
wherein
- the pole teeth (4) have cutouts (10);
- the slot wedges (8) have peripheral regions and are clamped to the respective peripheral regions in the cutouts (10) of the respective pole teeth (4); and
- the separators (12) are supported on the respective pole teeth (4) in the peripheral regions of the respective slot wedges (8).

8. Electric motor (1) comprising a rotor (2) according to one of Claims 1 to 7.

## Revendications

1. Rotor (2) pour une machine électrique rotative, qui présente :
- une pluralité de dents polaires (4) portant un enroulement d'excitation (5) ;
- des rainures (7) respectivement formées entre les dents polaires (4) ;
- des clavettes (8) prévues dans les rainures (7) ;
- des séparateurs (12) étant en outre disposés dans les rainures (7), lesquels s'étendent à partir des clavettes (8) entre les enroulements (5) dans la direction d'un fond de rainure (19),
les séparateurs (12) étant réalisés en forme de V en section transversale, la pointe du V étant orientée vers le fond de rainure et les séparateurs (12) étant soumis à une précontrainte et s'appliquant contre les enroulements d'excitation (5) dans au moins une région de pressage (16, 17),
**caractérisé en ce que**
- les séparateurs (12) sont réalisés en matière plastique et
- les deux branches (13) des séparateurs en forme de V (12) sont connectées au niveau de leurs extrémités aux clavettes (8) ou s'appuient contre celles-ci.

2. Rotor (2) selon la revendication 1, dans lequel le séparateur (12) est disposé dans la région de la clavette (8) entre la clavette (8) et les enroulements d'excitation (5) et isole ces derniers électriquement les uns des autres.

3. Rotor (2) selon l'une quelconque des revendications 1 ou 2, dans lequel l'enroulement d'excitation (5) est entourée par une masse de scellage.

4. Rotor (2) selon la revendication 3, dans lequel la masse de scellage remplit également une région intérieure (18) formée entre la clavette (8) et les branches (13) du séparateur (12).

5. Rotor (2) selon la revendication 3, dans lequel une région intérieure (18) formée entre la clavette (8) et les branches (13) du séparateur (12) est maintenue exempte de masse de scellage.

6. Rotor (2) selon l'une quelconque des revendications 1 ou 2, dans lequel l'enroulement d'excitation (5) est entouré par une masse d'imprégnation.

7. Rotor (2) selon l'une quelconque des revendications précédentes, dans lequel
- les dents polaires (4) présentent des évidements (10) ;
- les clavettes (8) présentent des régions de bord et sont serrées au niveau des régions de bord respectives dans les évidements (10) des dents polaires respectives (4) ; et
- les séparateurs (12) s'appuient dans les régions de bord des clavettes respectives (8) contre les dents polaires respectives (4).

8. Moteur électrique (1) comprenant un rotor (2) selon l'une quelconque des revendications 1 à 7.
